# EUROPÄISCHE PATENTSCHRIFT

(11) **EP 1 629 590 B1**
(45) Veröffentlichungstag und Bekanntmachung des Hinweises auf die Patenterteilung: **15.08.2007**
(21) Anmeldenummer: 04735888.2
(22) Anmeldetag: 03.06.2004
(51) Int. Cl.: H02K 21/22

(54) **TRANSVERSALFLUSSMASCHINE**
TRANSVERSAL FLUX MACHINE
MACHINE A FLUX TRANSVERSAL

(30) Priorität: 03.06.2003 DE 10325085
(43) Veröffentlichungstag der Anmeldung: 01.03.2006
(73) Patentinhaber: Compact Dynamics GmbH, 82319 Starnberg (DE)
(72) Erfinder: GRÜNDL, Andreas, 82319 Starnberg (DE); HOFFMANN, Bernhard, 82319 Starnberg (DE)
(74) Vertreter: Schmidt, Steffen J.
(86) Internationale Anmeldenummer: PCT/EP2004/006007
(87) Internationale Veröffentlichungsnummer: WO 2004/107541

(56) Entgegenhaltungen:
- EP-A- 0 128 099
- EP-A- 0 218 522
- US-A- 2 797 346
- US-A- 5 854 521
- US-B1- 6 236 131

## Beschreibung

### Bereich der Erfindung

Die vorliegende Erfindung betrifft eine Transversalflussmaschine. Insbesondere betrifft die Erfindung eine Transversalflussmaschine mit einem Ständer und einem Läufer, wobei jeweils entweder der Ständer eine Ständerspule aufweist und der Läufer mit Permanentmagnet-Elementen versehen ist, oder der Läufer eine Läuferspule aufweist und der Ständer mit Permanentmagnet-Elementen versehen ist.

Aus der WO 99/48190 A1 ist eine Transversalflussmaschine mit C-förmigen Magnetfluss-Jochen bekannt, die zusätzlich am Luftspalt I-förmige Magnetfluss-Joche hat. Die Transversalflussmaschine aus der EP 0 218 522 A1 hat ebenfalls C-förmige Magnetfluss-Joche und zusätzlich in axialen Reihen angeordnete Magnetfluss-Leitstücke, die mit den Permanentmagneten des Läufers zumindest teilweise fluchtend ausgerichtet sind. Hierbei verläuft der Luftspalt axial.

### Begriffsdefinitionen

Unter dem Begriff " Transversalflussmaschine" werden sowohl Motoren als auch Generatoren verstanden. Dabei ist es für die Erfindung unerheblich, ob eine solche Maschine als rund laufende Maschine oder zum Beispiel als Linearmotor ausgestaltet ist. Außerdem ist die Erfindung sowohl bei Innenläufermaschinen als auch bei Außenläufermaschinen einsetzbar.

### Der Erfindung zugrundeliegendes Problem

Die Erfindung hat die Aufgabe, eine kompakt bauende und hocheffiziente Transversalflussmaschine bereit zu stellen, die eine hohe Leistungsdichte erlaubt.

### Erfindungsgemäße Lösung

Zur Lösung dieses Problems lehrt die Erfindung eine Transversalflussmaschine mit einem Ständer und einem Läufer. Dabei hat entweder der Ständer eine Spulenanordnung und der Läufer ist mit Permänentmagnet-Elementen versehen. Alternativ dazu kann der Läufer eine Spulenanordnung haben und der Ständer ist mit Permanentmagnet-Elementen versehen. Die Spulenanordnung hat wenigstens eine zylindrische Wicklung und ist von einem in einer längs der Mittellängsachse der Spulenanordnung gelegten Schnittansicht etwa C-förmig gestalteten Magnetfluss-Joch eingefaßt. Das Magnetfluss-Joch hat an jedem Ende einen Schenkel, der jeweils eine Stirnfläche der Spulenanordnung zumindest teilweise umgreift. An einer den Permanentmagnet-Elementen zugewandten Mantelfläche der Spulenanordnung sind in mehreren, umfangsmäßig beabstandeten Reihen jeweils mehrere axial orientierte Magnetfluss-Leitstücke koaxial zur Mittellängsachse der Spulenanordnung angeordnet. Unter Bildung eines Luftspaltes sind, von den Magnetfluss-Leitstücken beabstandet, in umfangsmäßig beabstandeten Reihen jeweils mehrere Permanentmagnet-Elemente angeordnet, deren magnetische Orientierung zu dem Luftspalt hin jeweils abwechselnd ist. In bestimmten Positionen des Läufers relativ zum Ständer sind die Permanentmagnet-Elemente mit wenigstens einigen der Magnetfluss-Leitstücke zumindest teilweise fluchtend ausgerichtet.

Diese Anordnung erreicht, dass ein Magnetfluss von einem Schenkel des Magnetfluss-Joches zu dem anderen Schenkel des Magnetfluss-Joches abwechselnd durch die Magnetfluss-Leitstücke und zu diesen ausgerichteten Permanentmagnet-Elemente fließt. Dabei wechselt der Magnetfluss jeweils von einer ersten axial orientierten Reihe der Magnetfluss-Leitstücke und zu diesen ausgerichteten Permanentmagnet-Elementen zu einer benachbarten zweiten Reihe und wieder zurück zur ersten Reihe in axialer Richtung fortschreitend hin und her.

Hierdurch wird eine maximale Ausnutzung des vorhandenen Raums (insbesondere in axialer Richtung) in der elektrischen Maschine mit sehr hoher Zuverlässigkeit im Betrieb bei geringen Herstellungskosten erreicht. Durch die verbesserte Raumausnutzung erhöht sich außerdem der Wirkungsgrad oder die Leistungsdichte der Maschine.

### Ausgestaltungen und Weiterbildungen der Erfindung

Bevorzugt weist der Ständer die Spulenanordnung mit den Magnetfluss-Leitstücken auf und der Läufer ist mit den Permanentmagnet-Elementen versehen. Dies vermeidet die Notwendigkeit bewegter (zum Beispiel rotierender) Stromübergänge auf eine im Läufer vorhandene Spulenanordnung.

In einer Ausführungsform der Erfindung kann die Spulenanordnung wenigstens eine kreisringzylindrische Wicklung aufweisen und das etwa C-förmig gestaltete Magnetfluss-Joch für eine Aussenläufermaschine im Innern der kreisringzylindrischen Spulenanordnung bzw. für eine Innenläufermaschine am Äusseren der kfeisfihgzylindrischen Spulenanordnung angeordnet sein.

Die beiden Schenkel des Magnetfluss-Joches können von den jeweiligen Stirnflächen der Spulenanordnung her mit einem Endabschnitt auf diejenige Mantelfläche der kreisringzylindrischen Spulenanordnung reichen, an der die Magnetfluss-Leitstücke angeordnet sind. Diese Mantelfläche ist bei einer Innenläufermaschine die innere Mantelfläche der kreisringzylindrischen Spulenanordnung und bei einer Aussenläufermaschine die äussere Mantelfläche der kreisringzylindrischen Spulenanordnung.

Die beiden Endabschnitte können mit Ausnehmungen versehen sein, in die an sie angrenzende Magnettluss-Leitstücke ragen. Vorzugsweise sind die Ausnehmungen genauso breit wie zwischen ihnen verbleibende Vorsprünge. Damit können jeweils die in mehreren Reihen angeordneten, mehreren Magnetfluss-Leitstücke jeder Reihe zueinander und zu den Magnetfluss-Leitstücken benachbarter Reihen angeordnet im Wesentlichen gleichmäßig beabstandet werden.

Das Magnetfluss-Joch kann aus Blechen oder Blechabschnitten aufgebaut sein. Es ist auch möglich, dass das Magnetfluss-Joch aus zu der entsprechenden Gestalt gepreßten und gesinterten Eisenpartikeln geformt ist. Gleichermaßen können auch Mischformen aus diesen beiden Varianten verwendet werden, bei denen Übergangsbereiche von radial orientierten Blechabschnitten zu axial orientierten Blechabschnitten aus gepreßten und gesinterten Eisenpartikeln geformt sind.

Insbesondere kann das Magnetfluss-Joch in einem die beiden Schenkel verbindenden Mittelabschnitt als gerolltes Blechrohr, seine beiden Schenkel als gestapelte kreisringscheibenförmige radial orientierte Blechstapel, und/oder deren beide Endabschnitte der Schenkel als koaxial zur Mittellängsachse orientierte Blechstapel gestaltet sein.

Die Magnetfluss-Leitstücke können aus massivem eisenhaltigem Metall, aus gestapelten Blechen oder aus zu der entsprechenden Gestalt gepreßten und gesinterten Eisenpartikeln geformt sein. Dies ist in erster Linie von der Betriebsfrequenz des die Spulenanordnung durchfließenden Stromes abhängig, da mit steigender Frequenz die Wirbelstromverluste in Magnetfluss-Leitstücken aus massivem eisenhaltigem Metall zunehmen.

Die Magnetfluss-Leitstücke können eine im Wesentlichen quaderförmige Gestalt haben. Es ist auch möglich, ihnen eine sich zu ihren Enden hin in der Breite und/ oder der Höhe verjüngende Gestalt zu geben. Eine solche Formgebung verringert oder minimiert die magnetischen Streuflüsse zwischen benachbarten Magnetfluss-Leitstücken.

Die Permanentmagnet-Elemente habe vorzugsweise eine im Wesentlichen quaderförmige Gestalt; sie jedoch auch können eine Gestalt aufweisen, die im Wesentlichen mit der Gestalt der Magnetfluss-Leitstücke übereinstimmt; sie können also rechteckig, trapez- oder dreieck-, bzw. rautenförmig, oder dergl. sein.

Die Spulenanordnung kann entweder mit Strom einer einzigen Phase betrieben werden oder als Mehrphasenanordnung (vorzugsweise mehr als zwei) ausgestaltet sein. Im letzteren Fall kann sie mehrere koaxial nebeneinander angeordnete Wicklungen aufweisen, die dazu eingerichtet sind, phasenversetzt zu einander betrieben zu werden.

Dabei kann zwischen zwei nebeneinander angeordneten Wicklungen jeweils ein Magnetfluss-Leitsteg von einem der Magnetfluss-Leitstücke zu dem die beiden Schenkel verbindenden Mittelabschnitt des Magnetfluss-Joches angeordnet sein, wobei der Leitsteg in seinen Abmessungen und seiner Materialwahl (Eisenpulver, Eisenblech, massives eisenhaltiges Metall) so gestaltetet ist, dass er den aus einem Phasenunterschied zwischen den durch die beiden an ihne angrenzenden Wicklungen fliessenden Strömen resultierenden Magnetfluss leiten kann ohne in die magnetische Sättigung zu gelangen.

Zwischen benachbarten Magnetfluss-Leitstücken können magnetisch im Wesentlichen unwirksame Verbinder angeordnet sein, welche die relative Position der Magnetfluss-Leitstücke an der Mantelfläche der Spulenanordnung zueinander festlegen.

Weitere Merkmale, Eigenschaften, Vorteile und mögliche Abwandlungen werden für einen Fachmann anhand der nachstehenden Beschreibung deutlich, in der auf die beigefügte Zeichnung Bezug genommen ist.

In Fig. 1 ist seitliche schematische Ansicht eines Längsschnittes durch eine Ausführungsform einer Transversalflussmaschine gemäß der Erfindung veranschaulicht.

In Fig. 1a ist seitliche schematische Ansicht einer Abwicklung des Läufers aus der Transversalflussmaschine gemäß Fig. 1 veranschaulicht.

In Fig. 2 ist eine Abwicklung einer schematischen Draufsicht auf einen Ständer der erfindungsgemäßen Ausführungsform der Transversalflussmaschine aus Fig. 1 veranschaulicht.

In Fig. 3 ist eine Abwicklung einer schematischen Draufsicht auf einen weitere Ausführungsform eines Ständers der erfindungsgemäßen Transversalflussmaschine aus Fig. 1 mit gegenüber Fg. 2 veränderten Magnetfluss-Leitstücken veranschaulicht.

In Fig. 4 ist in einer seitlichen Schnittansicht eine weitere Ausführungsform eines Magnetfluss-Leitstückes veranschaulicht.

In Fig. 5 ist eine alternative Ausführungsform von Magnetfluss-Leitstücken zwischen zwei separaten Spulenabschnitten veranschaulicht, die jeweils eine Wicklung bilden, die in axialer Erstreckung über mehrere Magnetfluss-Leitstücke reichen kann.

### Detaillierte Beschreibung bevorzugter Ausführungsformen

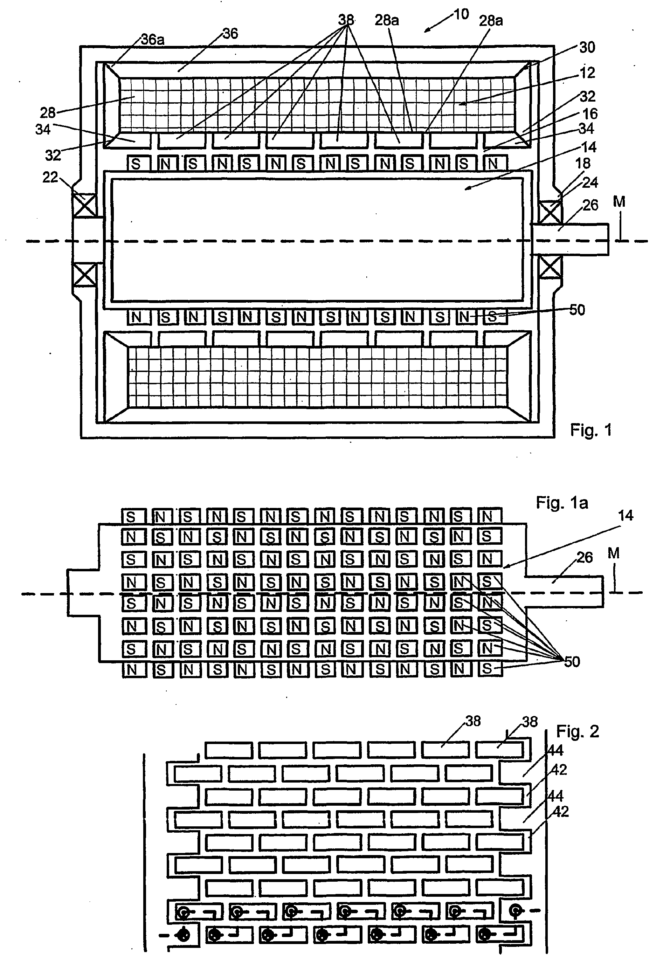

In Fig. 1 ist ein Längsschnitt durch eine Ausführungsform einer Transversalflussmaschine 10 in der Ausgestaltung als Innenläufermaschine gezeigt, wobei die Erfindung auch für eine Außenläufermaschine einsetzbar ist. Die Transversalflussmaschine 10 hat einen Ständer 12 und einen Läufer 14. Zwischen dem Läufer 14 und dem Ständer 12 ist ein Luftspalt 16 gebildet. Der Ständer 12 ist in einem rohrförmigen Gehäuse 18 aufgenommen, das an seinen beiden Stirnseiten jeweils ein Lager 22, 24 zur Aufnahme einer Abtriebswelle 26 aufweist. Die Abtriebswelle 26 ist in üblicher Weise mit dem Läufer 14 drehfest verbunden.

Der Ständer 12 hat eine Spulenanordnung 28 mit einer zylindrischen Wicklung, die koaxial zur Mittellängsachse M der Transversalflussmaschine 10 angeordnet ist. Die Spulenanordnung 28 ist von einem in einer längs der Mittellängsachse M der Spulenanordnung gelegten Schnittansicht etwa C-förmig gestalteten Magnetfluss-Joch 30 eingefaßt. Das Magnetfluss-Joch 30 hat an seinen beiden Enden jeweils einen Schenkel 32, der eine jeweilige Stirnfläche der Spulenanordnung 28 umgreift. An der inneren Mantelfläche 28a der Spulenanordnung 28 sind eine Vielzahl von Magnetfluss-Leitstücken 38 koaxial zur Mittellängsachse M der Spulenanordnung 28 in mehreren axialen Reihen angeordnet (siehe auch Fig. 2). Die beiden Schenkel 32 des Magnetfluss-Joches 30 reichen von den jeweiligen Stirnflächen der Spulenanordnung 28 her jeweils mit einem Endabschnitt 34 auf diejenige Mantelfläche 28a der kreisringzylindrischen Spulenanordnung 28 reichen, an der auch die Magnetfluss-Leitstücke 38 angeordnet sind.

Das Magnetfluss-Joch 30 ist bei dieser Ausführungsform mehrteilig aufgebaut. Ein die beiden Schenkel 32 verbindender Mittelabschnitt 36 ist als zur Mittellängsachse koaxial orientiertes, mehrlagiges; gerolltes Blechrohr hergestellt. Dieses Blechrohr hat an beiden Enden jeweils eine sich trichterförmig nach aussen öffnende Fase 36a, an die sich die beiden magnetischen Fluss leitenden Schenkel 32 anschließen. Die beiden Schenkel 32 sind als in axialer Richtung gestapelte kreisringscheibenförmige radial orientierte Blechstapel ausgestaltet. Die beiden Endabschnitte 34 der Schenkel 32 sind als koaxial zur Mittellängsachse orientierte Blechstapel gestaltet.

Wie in Fig. 2 veranschaulicht, sind die Magnetfluss-Leitstücke 38 zwischen den beiden Endabschnitten 34 der Schenkel 32, welche die Enden der Spulenanordnung 28 vollständig umgeben, in Reihen angeordnet. Die beiden Endabschnitte 34 sind mit Ausnehmungen 42 versehen, in die an sie angrenzende Magnetfluss-Leitstücke 38 ragen. Zwischen zwei benachbarten Ausnehmungen 42 ist jeweils ein Vorsprung 44 gebildet, an den ebenfalls jeweils ein Magnetfluss-Leitstücke 38 angrenzt. Damit entsteht die in Fig. 2 gezeigte längs der Mittelachse des Läufers orientierte axiale Versetzung jeweils benachbarter Reihen von Magnetfluss-Leitstücken 38 um etwa ein halbe Länge eines Magnetfluss-Leitstückes 38, was auch der axialen Tiefe einer der Ausnehmungen 42 entspricht.

Von den Magnetfluss-Leitstücken 38 um den Luftspalt 16 in radialer Richtung beabstandet, sind an dem Läufer 14 Permanentmagnet-Elemente 50 angeordnet, deren magnetische Orientierung zu dem Luftspalt 16 hin jeweils abwechselnd ist. Dies ist durch die schachbrettartig abwechselnden Polungen "N" und "S" veranschaulicht. In bestimmten Positionen des Läufers 14 relativ zum Ständer 12 fluchten die Permanentmagnet-Elemente 50 einer axialen Reihe des Läufers 14 mit Magnetfluss-Leitstücken 38 einer axialen Reihe des Ständers 12.

Im unteren Teil der Fig. 2 ist schematisch der Verlauf des magnetischen Flusses veranschaulicht, wie er von einer Seite des Ständers 14 zur gegenüberliegenden Seite orientiert ist.

Der Magnetfluss kommt von einer, zum Beispiel der in Fig. 2 rechten Seite des Magnetfluss-Joches 30 durch einen Vorsprung 44 radial nach aussen - über den Luftspalt - in ein damit fluchtendes (in Fig. 2 nicht gezeigtes) erstes Permanentmagnet-Element 50 in einer ersten Reihe. Von dem ersten Permanentmagnet-Element 50 geht der Magnetfluss tangential in ein in der benachbarten Reihe liegendes (in Fig. 2 nicht gezeigtes) Permanentmagnet-Element 50. Von dem Permanentmagnet-Element 50 geht der Magnetfluss - über den Luftspalt - in ein damit fluchtendes Magnetfluss-Leitstück 38 und fließt darin axial weiter. Anschließend geht der Magnetfluss aus diesem Magnetfluss-Leitstück 38 - über den Luftspalt - radial in ein nächstes, in der selben axialen Reihe liegendes zweites Permanentmagnet-Element 50. Von dort geht der Magnetfluss radial - über den Luftspalt - in ein damit fluchtendes Magnetfluss-Leitstück 38 und fließt darin axial weiter. Diesen Weg nimmt der Magnetfluss so lange weiter, bis er zu dem gegenüberliegenden Schenkel des Magnetfluss-Joches gelangt.

Mit anderen Worten fließt der Magnetfluss abwechselnd durch Magnetfluss-Leitstücke 38 und zu diesen ausgerichtete Permanentmagnet Elemente 50. Dabei wechselt der Magnetfluss jeweils zwischen einer ersten Reihe der Magnetfluss-Leitstücke 28 bzw. mit diesen fluchtenden Permanentmagnet-Elementen 50 zu einer benachbarten zweiten Reihe und wieder zurück zur ersten Reihe in axialer Richtung fortschreitend hin und her.

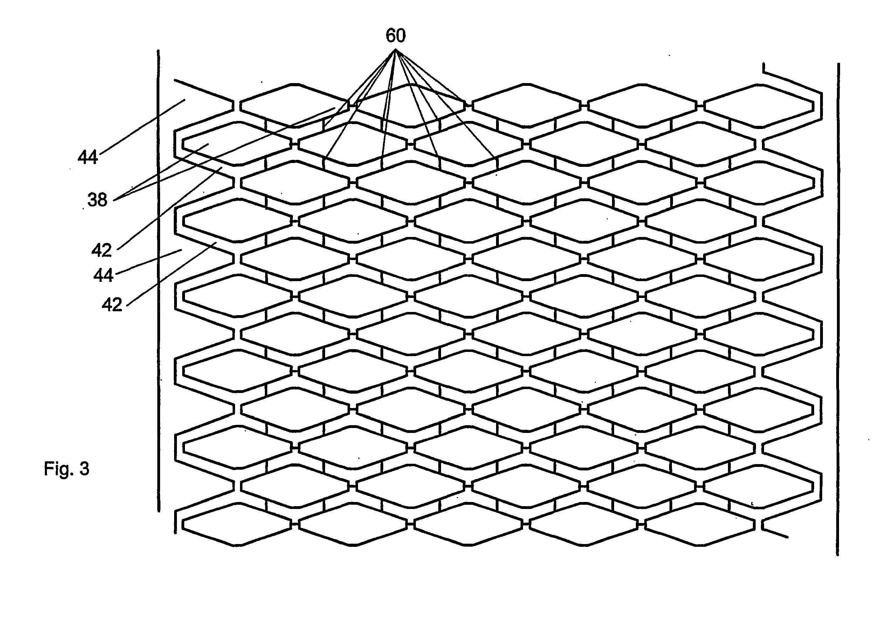

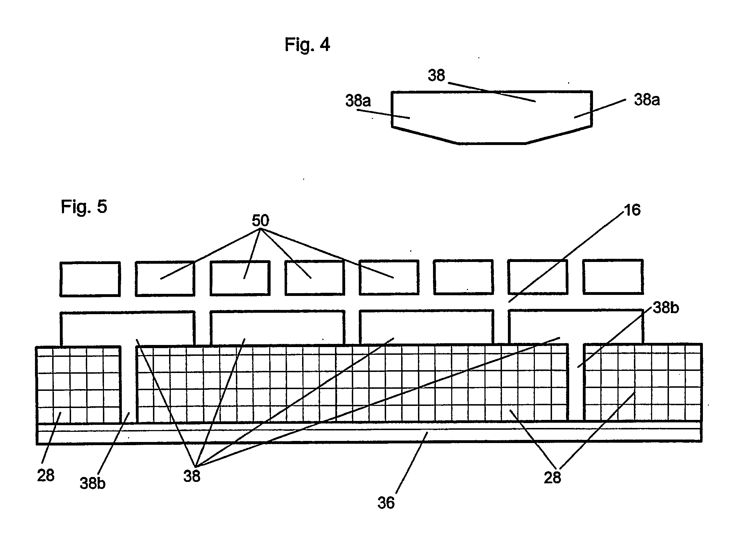

Wie in Fig. 1 und 2 veranschaulicht, haben die Magnetfluss-Leitstücke 38 eine im Wesentlichen quaderförmige Gestalt. Dabei stimmt die Gestalt der Magnetfluss-Leitstücke 38 mit der Gestalt der Permanentmagnet-Elemente 50 bis auf deren Abmessungen in axialer Richtung überein. Fig. 3 zeigt anhand der Magnetfluss-Leitstücke 38, dass diese eine sich in Richtung zu den Endabschnitten der beiden Schenkel hin in der Breite verjüngende Gestalt haben können. Zusätzlich zur Verjüngung in der Breite können die Magnetfluss-Leitstücke 38 sich auch in der Höhe zu ihren Enden 38a hin verjüngen. Dies ist in Fig. 4 in einer seitlichen Schnittansicht für ein Magnetfluss-Leitstück 38 aus Fig. 3 veranschaulicht. Zwischen benachbarten Magnetfituss-Leitstücken 38 sind, wie in Fig. 3 veranschaulicht, magnetisch im Wesentlichen unwirksame Verbinder 60 angeordnet, welche die relative Position der Magnetfluss-Leitstücke zueinander festlegen. Diese Verbinder 60 können entweder dünne Stege aus dem selben Material wie die Magnetfluss-Leitstücke 38 sein, welche aufgrund ihrer geringen Abmessungen im Betrieb sofort in die magnetische Sättigung gelangen und daher magnetisch proaktisch nicht wirksam sind. Alternativ dazu können die Verbinder auch durch zwischen die Magnetfluss-Leitstücke 38 eingebrachtes Kunststoff-Material gebildet sein.

Die Permanentmagnet-Elemente 50 können eine Gestalt aufweisen, die im Wesentlichen mit der Gestalt der Magnetfluss-Leitstücke 38 übereinstimmt; sie können also rechteckig, trapez- oder dreieck-, bzw. rautenförmig, oder dergl. sein. Allerdings sind die Permanentmagnet-Elemente 50 in Richtung der Mittellängsachse M nur etwa halb so lang wie die mit ihnen fluchtenden Magnetfluss-Leitstücke 38.

In Fig. 1 ist eine Transversalflussmaschine veranschaulicht, die eine die Spulenanordnung mit einer einzigen zylindrischen Wicklung koaxial zur Mittellängsachse M des Ständers zeigt. Es ist jedoch auch möglich, mehrere koaxial nebeneinander angeordnete Wicklungen vorzusehen, die phasenversetzt zu einander bestromt werden. Dabei können die einzelnen Wicklungen jeweils von der Mitte eines Magnetfluss-Leitstückes 38 bis zur Mitte eines weiteren Magnetfluss-Leitstückes 38 in axialer Richtung reichen. Dies ist in Fig. 5 veranschaulicht, wobei eine Wicklung über mehrere (in Fig. 5 sind es drei) Magnetfluss-Leitstücke 38 in axialer Erstreckung reichen kann.

Ersichtlich ist hier zwischen zwei nebeneinander angeordneten Wicklungen der Spulenanordnung 28 jeweils ein Magnetfluss-Leitsteg 38b von einem der Magneifluss-Leitstücke 38 zu dem die beiden Schenkel 32 verbindenden Mittelabschnitt 36 des Magnetfluss-Joches angeordnet. Der Magnetfluss-Leitsteg 38b ist dabei so dimensioniert und gestaltet, dass er den aus einem Phasenunterschied zwischen den durch die beiden Wicklungen fliessenden Strömen resultierenden Magnetfluss leiten kann, ohne in die magnetische Sättigung zu gelangen.

Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

## Patentansprüche

1. Transversalflussmaschine (10) mit einem Ständer (12) und einem Läufer (14), wobei
- entweder der Ständer eine Spulenanordnung (28) aufweist und der Läufer mit Permanentmagnet-Elementen (50) versehen ist, oder der Läufer eine Spulenanordnung aufweist und der Ständer mit Permanentmagnet-Elementen versehen ist,
- die Spulenanordnung (28) wenigstens eine zylindrische Wicklung aufweist und von einem in einer längs der Mittellängsachse (M) der Spulenanordnung (28) gelegten Schnittansicht etwa C-förmig gestalteten Magnetfluss-Joch (30) eingefaßt ist, das an jedem Ende einen Schenkel aufweist (32), der jeweils eine Stirnfläche der Spulenanordnung (28) zumindest teilweise umgreift,
- an einer den Permanentmagnet-Elementen (50) zugewandten Mantelfläche (28a) der Spulenanordnung (28) in mehreren, umfangsmäßig beabstandeten Reihen jeweils mehrere axial orientierte Magnetfluss-Leitstücke (38) koaxial zur Mittellängsachse (M) der Spulenanordnung (28) angeordnet sind, wobei
- die Permanentmagnet-Elemente (50) in mehreren, umfangsmäßig beabstandeten Reihen von jeweils mehreren Permanentmagnet-Elementen (50) angeordnet sind, deren magnetische Orientierung zu dem Luftspalt (16) hin jeweils abwechselnd ist, und
- die Permanentmagnet-Elemente (50) in bestimmten Positionen des Läufers (12) relativ zum Ständer (14) mit wenigstens einigen der Magnetfluss-Leitstücke (38) zumindest teilweise fluchtend ausgerichtet sind, **dadurch gekennzeichnet, daß** die Permanentmagnet-Elemente (50) von den Magnetfluss-Leitstücken (38) in radialer Richtung durch einen dazwischen liegenden Luftspalt (16) beabstandet sind.

2. Transversalflussmaschine nach Anspruch 1, wobei
- die Spulenanordnung (28) wenigstens eine kreisringzylindrische Wicklung aufweist und das etwa C-förmig gestaltete Magnetfluss-Joch (30) für eine Aussenläufermaschine im Innern der kreisringzylindrischen Spulenanordnung und für eine Innenläufermaschine am Äusseren der kreisringzylindrischen Spulenanordnung (28) angeordnet ist.

3. Transversalflussmaschine nach Anspruch 1 oder 2, wobei
- die beiden Schenkel (32) des Magnetfluss-Joches (30) von den jeweiligen Stirnflächen der Spulenanordnung (28) her mit einem Endabschnitt (34) auf diejenige Mantelfläche (28a) der kreisringzylindrischen Spulenanordnung (28) reichen, an der die Magnetfluss-Leitstücke angeordnet sind.

4. Transversalflussmaschine nach dem vorhergehenden Anspruch, wobei
- die beiden Endabschnitte (34) mit Ausnehmungen (42) versehen sind, in die an sie angrenzende Magnetfluss-Leitstücke (38) ragen.

5. Transversalflussmaschine nach einem der vorhergehenden Ansprüche, wobei
- das Magnetfluss-Joch (30) aus Blechen oder Blechabschnitten (32, 24, 36) aufgebaut ist, oder aus zu der entsprechenden Gestalt gepreßten und gesinterten Eisenpartikeln geformt ist.

6. Transversalflussmaschine nach dem vorhergehenden Anspruch, wobei
- das Magnetfluss-Joch (30) in einem die beiden Schenkel (32) verbindenden Mittelabschnitt (36) als gerolltes Blechrohr, und/oder die beiden Schenkel (32) als gestapelte kreisringscheibenförmige radial orientierte Blechstapel, und/oder die beiden Endabschnitte (34) der Schenkel (32) als koaxial zur Mittellängsachse (M) orientierte Blechstapel gestaltet sind.

7. Transversalflussmaschine nach dem vorhergehenden Anspruch, wobei
- die Magnetfluss-Leitstücke (38) aus massivem eisenhaltigem Metall, aus gestapelten Blechen oder aus zu der entsprechenden Gestalt gepreßten und gesinterten Eisenpartikeln geformt sind.

8. Transversalflussmaschine nach dem vorhergehenden Anspruch, wobei
- die Magnetfluss-Leitstücke (38) eine im Wesentlichen quaderförmige Gestalt oder eine sich in Richtung zu den Endabschnitten der beiden Schenkel hin in der Breite und/oder der Höhe verjüngende Gestalt haben.

9. Transversalflussmaschine nach einem der vorhergehenden Ansprüche, wobei
- die Permanentmagnet-Elemente (50) eine Gestalt aufweisen, die im Wesentlichen mit der Gestalt der Magnetfluss-Leitstücke (38) übereinstimmt.

10. Transversalflussmaschine nach einem der vorhergehenden Ansprüche, wobei
- die Spulenanordnung (28) mehrere koaxial nebeneinander angeordnete Wicklungen aufweist, die dazu eingerichtet sind, phasenversetzt zu einander betrieben zu werden.

11. Transversalflussmaschine nach einem der vorhergehenden Ansprüche, wobei
- zwischen zwei nebeneinander angeordneten Wicklungen jeweils ein Magnetfluss-Leitsteg (38b) von einem der Magnetfluss-Leitstücke (38) zu dem die beiden Schenkel (32) verbindenden Mittelabschnitt (36) des Magnetfluss-Joches (30) angeordnet ist, wobei der Leitsteg (38b) so dimensioniert ist, dass er den aus einem Phasenunterschied zwischen den durch die beiden Wicklungen fliessenden Strömen resultierenden Magnetfluss leiten kann ohne in die magnetische Sättigung zu gelangen.

12. Transversalflussmaschine nach einem der vorhergehenden Ansprüche, wobei
- zwischen benachbarten Magnetfluss-Leitstücken (38) magnetisch im Wesentlichen unwirksame Verbinder (60) angeordnet sind, welche die relative Position der Magnetfluss-Leitstücke (38) zueinander festlegen.

## Claims

1. A machine with transversal flux (10), comprising a stator (12) and a rotor (14), wherein
- either the stator comprises a coil arrangement (28) and the rotor is provided with permanent magnet elements (50) or the rotor comprises a coil arrangement and the stator is provided with permanent magnet elements,
- the coil arrangement (28) comprises at least one cylindrical winding and is encompassed by a magnetic flux yoke (30) which in a sectional view along the centre longitudinal axis (M) of the coil arrangement (28) is approximately C-shaped and comprises a leg (32) at each end which at least partially encompasses one face each of the coil arrangement (28),
- at one surface area (28a) of the coil arrangement (28), which faces the permanent magnet elements (50), several axially oriented magnetic flux conducting pieces (38) are arranged coaxially with the centre longitudinal axis (M) of the coil arrangement (28) in several rows spaced in a circumferential direction, wherein
- the permanent magnet elements (50) are arranged in several rows, which are spaced in a circumferential direction, of in each case several permanent magnet elements (50) the magnetic orientation of which alternates toward the air gap (16) in each case, and
- the permanent magnet elements (50) in certain positions of the rotor (12) relative to the stator (14) are oriented at least partially in alignment with at least some of the magnetic flux conducting pieces (38), **characterized in that**
- the permanent magnet elements (50) are spaced from the magnetic flux conduction pieces (38) in the radial direction by an intermediate air gap (16).

2. The machine with transversal flux according to Claim 1, wherein
- the coil arrangement (28) comprises at least one annular cylindrical winding and the approximately C-shaped magnetic flux yoke (30) for an external rotor machine is arranged in the interior of the annular cylindrical coil arrangement and for an internal rotor machine at the outside of the annular cylindrical coil arrangement (28).

3. The machine with transversal flux according to Claim 1 or 2, wherein
- the two legs (32) of the magnetic flux yoke (30) extend with an end portion (34) each from the respective faces of the coil arrangement (28) to that surface area (28a) of the annular cylindrical coil arrangement (28) at which the magnetic flux conducting pieces are arranged.

4. The machine with transversal flux according to the previous claim, wherein
- the two end portions (34) are provided with recesses (42) into which protrude adjacent magnetic flux conducting pieces (38).

5. The machine with transversal flux according to one of the previous claims, wherein
- the magnetic flux yoke (30) is constructed of sheet metal plates or sheet metal plate portions (32, 34, 36) or is formed form iron particles which are pressed and sintered to the corresponding shape.

6. The machine with transversal flux according to the previous claim, wherein
- the magnetic flux yoke (30) is constructed as a rolled sheet metal tube in a central portion (36) connecting the two legs (32), and/or the two legs (32) are formed as stacked circular disk-shaped radially oriented sheet metal stacks, and/or the two end portions (34) of the legs (32) as sheet metal stacks which are oriented coaxially to the centre longitudinal axis (M).

7. The machine with transversal flux according to the previous claim, wherein
- the magnetic flux conducting pieces (38) are formed from solid iron-containing metal, from stacked sheet metal plates, or from iron particles which are pressed and sintered to the corresponding shape.

8. The machine with transversal flux according to the previous claim, wherein
- the magnetic flux conducting pieces (38) have an essentially quadrangular shape or a shape which tapers towards the end portions of the two legs in width and/or height.

9. The machine with transversal flux according to one of the previous claims, wherein
- the permanent magnet elements (50) have a shape which essentially corresponds to the shape of the magnetic flux conducting pieces (38).

10. The machine with transversal flux according to one of the previous claims, wherein
- the coil arrangement (28) comprises several coaxial windings which are arranged adjacent to each other and are adapted to be operated offset in phase to each other.

11. The machine with transversal flux according to one of the previous claims, wherein
- one magnetic flux conducting land (38b) each is arranged between two adjacent windings, which extends from one of the magnetic flux conducting pieces (38) to the central portion (36) connecting the two legs (32), with the conducting land (38b) being dimensioned in such a manner that it is capable of conducting the magnetic flux resulting from the phase difference between the currents flowing through its adjoining windings, without reaching magnetic saturation.

12. The machine with transversal flux according to one of the previous claims, wherein
- between neighbouring magnetic flux conducting pieces (38) magnetically essentially ineffective connectors (60) are arranged which define the relative position of the magnetic flux conducting pieces (38) to each other.

## Revendications

1. Machine à flux transversal (10) comprenant un stator (12) et un rotor (14), dans laquelle
- soit le stator comprend un agencement à bobine (28) et le rotor est doté d'éléments à aimants permanents (50), soit le rotor comprend un agencement à bobine et le stator est doté d'éléments à aimants permanents,
- l'agencement à bobine (28) comprend au moins un enroulement cylindrique et est enserré par une culasse à flux magnétique (30) réalisée approximativement en forme de C dans une vue latérale prise le long de l'axe longitudinal médian (M) de l'agencement à bobine (28), ladite culasse présentant à chaque extrémité un bras (32) qui entoure au moins partiellement une surface frontale respective de l'agencement à bobine (28),
- sur une surface enveloppe (28a), tournée vers les éléments à aimants permanents (50), de l'agencement à bobine (28) sont agencées plusieurs pièces conductrices du flux magnétique (38), coaxialement à l'axe longitudinal médian (M) de l'agencement à bobine (28), orientées axialement et suivant plusieurs rangées respectives écartées sur la périphérie, dans laquelle
- les éléments à aimants permanents (50) sont agencés en plusieurs rangées, écartées sur la périphérie, comprenant chacune plusieurs éléments à aimants permanents (50), dont l'orientation magnétique est respectivement alternée par rapport à l'entrefer (16), et
- les éléments à aimants permanents (50) sont orientés, dans certaines positions du rotor (12) par rapport au stator (14), en alignement au moins partiel avec quelques-unes au moins des pièces conductrices du flux magnétique (3 8),
**caractérisée en ce que** les éléments à aimants permanents (50) sont écartés en direction radiale vis-à-vis des pièces conductrices du flux magnétique (38) par un entrefer (16) disposé entre eux.

2. Machine à flux transversal selon la revendication 1, dans laquelle
- l'agencement à bobine (28) comprend au moins un enroulement cylindrique circulaire, et la culasse à flux magnétique (30) réalisée approximativement en forme de C est agencée, pour une machine à rotor extérieur, à l'intérieur de l'agencement à bobine cylindrique circulaire, et pour une machine à rotor intérieur, à l'extérieur de l'agencement à bobine cylindrique circulaire (28).

3. Machine à flux transversal selon la revendication 1 ou 2, dans laquelle
- les deux bras (32) de la culasse à flux magnétique (30) s'étendent depuis les surfaces frontales respectives de l'agencement à bobine (28) par un tronçon terminal (34) jusqu'à celle des surfaces enveloppes (28a) de l'agencement à bobine cylindrique circulaire (28) sur laquelle sont agencées les pièces conductrices du flux magnétique.

4. Machine à flux transversal selon la revendication précédente, dans laquelle
- les deux tronçons terminaux (34) sont dotés d'évidements (42) dans lesquels pénètrent des pièces conductrices de flux magnétique (38) qui leur sont adjacentes.

5. Machine à flux transversal selon l'une des revendications précédentes, dans laquelle
- la culasse à flux magnétique (30) est réalisée à partir de tôle ou de tronçons de tôle (32, 24, 36), ou est formée à partir de particules de fer pressées sous la configuration correspondante et frittées.

6. Machine à flux transversal selon la revendication précédente, dans laquelle
- la culasse à flux magnétique (30) est conçue, dans un tronçon médian (36) qui relie les deux branches (32), comme un tube en tôle roulée, et/ou les deux bras (32) sont conçus comme une pile de tôles orientées radialement en forme de disques circulaires empilés, et/ou les deux tronçons terminaux (34) des bras (32) sont conçus comme des empilements de tôles orientées coaxialement à l'axe longitudinal médian (M).

7. Machine à flux transversal selon la revendication précédente, dans laquelle
- les pièces conductrices de flux magnétique (38) sont formées en métal massif contenant du fer, en tôles empilées, ou en particules de fer mises à la presse sous la configuration correspondante et frittées.

8. Machine à flux transversal selon la revendication précédente, dans laquelle
- les pièces conductrices de flux magnétique (38) ont une configuration sensiblement parallélépipédique, ou une configuration qui va en se rétrécissant en largeur et/ou en hauteur en direction des tronçons terminaux des deux branches.

9. Machine à flux transversal selon l'une des revendications précédentes, dans laquelle
- les éléments à aimants permanents (50) présentent une configuration qui coïncide sensiblement avec la configuration des pièces conductrices du flux magnétique (38).

10. Machine à flux transversal selon l'une des revendications précédentes, dans laquelle
- l'agencement à bobine (28) comprend plusieurs enroulements agencés coaxialement les uns à côté des autres, qui sont conçus pour fonctionner en déphasage les uns par rapport aux autres.

11. Machine à flux transversal selon l'une des revendications précédentes, dans laquelle
- entre deux enroulements agencés l'un à côté de l'autre est agencée respectivement une barrette conductrice du flux magnétique (38b), depuis l'une des pièces conductrices de flux magnétique (38) jusqu'au tronçon médian (36), reliant les deux branches (32), de la culasse à flux magnétique (30), ladite barrette conductrice (38b) ayant une dimension telle qu'elle est capable de conduire le flux magnétique qui résulte d'une différence de phase entre les courants qui s'écoulent à travers les deux enroulements sans parvenir à la saturation magnétique.

12. Machine à flux transversal selon l'une des revendications précédentes, dans laquelle
- entre les pièces conductrices du flux magnétique (38) voisines sont agencés des éléments de liaison (60) essentiellement sans effet magnétique, qui déterminent la position relative des pièces conductrices de flux magnétique (38) les unes par rapport aux autres.
